# EUROPEAN PATENT SPECIFICATION

(11) **EP 2 127 302 B1**
(45) Date of publication and mention of the grant of the patent: **11.04.2018**
(21) Application number: 07709382.1
(22) Date of filing: 26.02.2007
(51) Int. Cl.: H04L 29/06, G06F 17/30, H04L 29/08

(54) **A METHOD AND APPARATUS FOR MONITORING CLIENT BEHAVIOUR.**
VERFAHREN UND VORRICHTUNG ZUM ÜBERWACHEN DES CLIENT-VERHALTENS
PROCÉDÉ ET APPAREIL SERVANT À SURVEILLER LE COMPORTEMENT D'UN CLIENT.

(43) Date of publication of application: 02.12.2009
(73) Proprietor: Telefonaktiebolaget LM Ericsson (publ), 164 83 Stockholm (SE)
(72) Inventor: LIDSTRÖM, Mattias, S-112 24 Stockholm (SE); HJELM, Johan, Tokyo 165-0025 (JP); KANTER, Theo, S-114 62 Rönninge (SE)
(74) Representative: Brann AB
(86) International application number: PCT/SE2007/000172
(87) International publication number: WO 2008/105685

(56) References cited:
- WO-A2-00/64193
- GB-A- 2 366 699
- US-A- 5 790 645
- US-A1- 2004 063 424
- COUTAND O. ET AL.: 'Context-aware Group Management in Mobile Environments' EU IST-511607 PROJECT MOBILIFE XP003018699

## Description

### TECHNICAL FIELD

The present invention relates generally to a method and apparatus for monitoring or observing the behaviour of a client in a communication network. In particular, the invention is concerned with the client's behaviour in relation to a group of clients.

### BACKGROUND

With the emergence of 3G mobile telephony, new packet-based communication technologies using IP (Internet Protocol) have been developed to support wireless communication of multimedia. For example, communication protocols in GPRS (General Packet Radio Service) and WCDMA (Wideband Code Division Multiple Access) support packet-switched multimedia services, as well as traditional circuit-switched voice calls.

A network architecture called "IP Multimedia Subsystem" (IMS) has been developed by the 3^{rd} Generation Partnership Project (3GPP) as a platform for handling multimedia services and sessions in the packet domain, based on IP transport. Thus, an IMS network can be used to initiate and control multimedia sessions for any IP enabled terminals being connected to any type of access networks. The sessions are controlled by various suitable session managing nodes, including the well-known IMS nodes S-CSCF (Serving Call Session Control Function), I-CSCF (Interrogating Call Session Control Function) and P-CSCF (Proxy Call Session Control Function).

Invoked multimedia services are enabled and executed by various application servers, either servers within the IMS network or external "third party" servers. Further, a main database element HSS (Home Subscriber Server) in the IMS network stores subscriber and authentication data for subscribing clients. IMS is mentioned in this description for illustrative purposes only, although the present invention is not limited to using an IMS network.

A signalling protocol called "SIP" (Session Initiation Protocol, according to the standard IETF RFC 3261) is typically used for handling multimedia sessions in IMS networks and other service networks. "SIP-enabled" terminal and servers can thus use this standard to initiate and terminate communications of multimedia by means of the IMS network.

A particular example of services that can be employed by means of an IMS network or other service networks is the so-called "presence" services. Presence is basically a dynamic and variable state profile of a client, and the presence services basically involve the publishing of presence data of the client to make it available to other clients and applications. Presence data may indicate the behaviour of a client in some respect by basically defining the state or situation of a client and his/her equipment. The presence data may include the following "client states":
- A client status, e.g. available, busy, in a meeting, on holiday, etc.
- A terminal status, e.g. switched on/off, engaged, out of coverage, etc.
- The geographic location of the client/terminal.
- Terminal capabilities and selections, e.g. functionality for SMS, MMS, chatting, games, video, etc.
- Other personal client information, e.g. interests, occupations, personal characteristics, moods, etc.

This information, or any selected parts thereof, can be stored in an application server in the IMS network, often referred to as the presence server, based on publications of "events" related to the client. These event publications may be received from either the client's communication terminal or his/her used network, whenever any presence data of the client is changed or updated.

A client may also subscribe for selected presence data of one or more other clients, e.g. according to a predefined list of an established client group sharing such presence data. Such presence subscriptions are typically also handled by a presence server. The subscribing client can then receive notifications from the presence server regarding current presence data, either automatically or upon request.

In SIP, a message called "SIP PUBLISH" can be used by clients to provide dynamic data to the presence server. Further, the SIP message called "SIP SUBSCRIBE" can be used by clients to subscribe for dynamic data of other clients, as handled by the presence server. Another SIP message called "SIP NOTIFY" can be used by presence servers when providing updated presence data to subscribing clients.

Recently, a concept has also been developed to provide refined or adapted information on communication clients, e.g. to increase the usability of applications for invoked services depending on the client's current situation or behaviour. This concept is generally referred to as the distribution of "context" information, which may be implemented by using similar mechanisms as for the above-described presence services. It is desirable to develop "context-aware" applications to achieve services optimally adapted to the prevailing circumstances. The context information reflecting the client's situation can thus be used to create an optimal service, or be shared in client groups in the same manner as presence data.

A context server may be used to collect information on the client by receiving client data from various sources, such as "sensors" or the like adapted to measure or register various variables or the like characterising the current state, status or situation of the client. For example, sensors may be arranged to measure physical characteristics such as temperature and movements, or to register terminal activities or any of the client states mentioned above for presence services. Hence, the above-described context information and the presence data of a client actually reflect the behaviour of that client in some respect, e.g. in terms of terminal usage and geographic whereabouts.

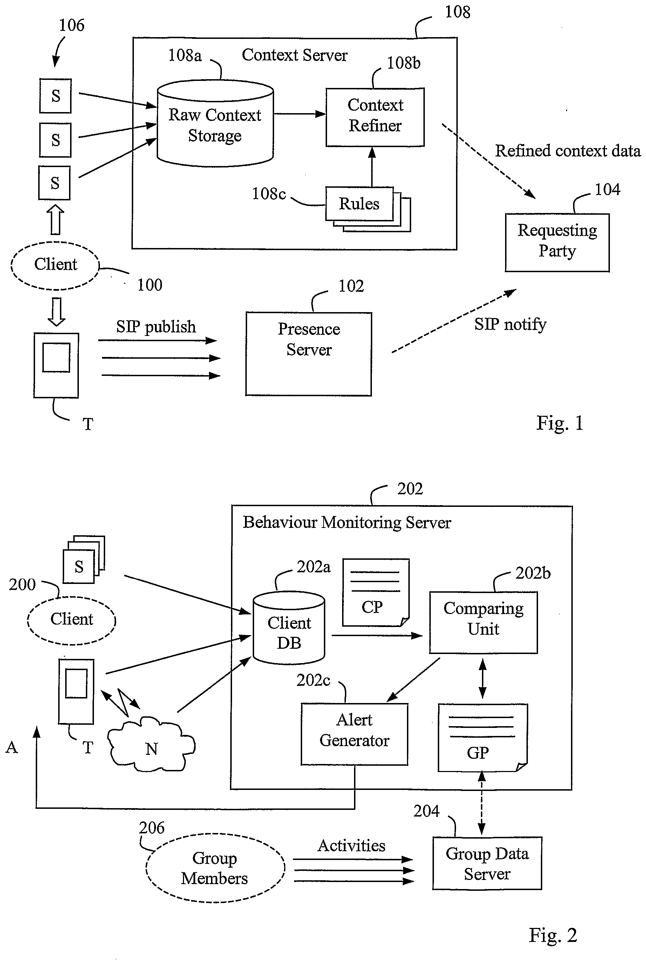

The currently available mechanisms for providing presence data and context data for a client of interest to a requesting party are illustrated schematically in Fig. 1. The client of interest 100 is a user of a mobile terminal T that frequently sends dynamic data, or event publications, to a presence server 102 basically as described above, e.g. in SIP PUBLISH messages using an IMS network (not shown). The presence server 102 may in turn send notifications to the requesting party 104, e.g. a subscribing client, regarding current presence data, e.g. in SIP NOTIFY messages.

In addition or alternatively, one or more sensors 106 may be arranged as described above to provide raw context data to a context server 108, the data being received and stored in a context storage unit 108a. The shown sensors 106 may also represent functions reflecting client activities in the terminal T or in the used network, not shown. Moreover, the existing routines in the communication network for generating call data records for clients can also be used to provide context data.

The stored raw data may then be processed and refined in a context refiner 108b by applying predefined rules 108c on the raw data, in order to derive or calculate new refined context information from the raw data. The predefined rules 108c may include algorithms or the like that calculate certain parameters, draw conclusions or create compilations from the raw data.

The refined context can then be distributed to the requesting party 104 according to conventional routines, not described here further. A policy for controlling the context distribution may also have been defined basically by the "context owner", who may be a network operator or the client 100 himself/herself. The policy may dictate the extent of availability of the context data to requesters, or that a particular requester is allowed to receive only some part of the available context data, etc. It should be noted that the requesting party 104 may obtain a subscription to receive context information from the context server 108 on a more or less continuous basis, i.e. in a similar manner as for the presence data.

Typically, the context information pertains to an individual client who has a certain profile as defined by his/her current context. However, a client may also belong to an established group of clients, having an aggregate profile shared by its members. For example, members of a family group may have individual contexts while the family may have a common context with an aggregate profile shared by its members, whereas another group specifically interested in, e.g., football games may have a completely different profile.

WO 06/115442 discloses a mechanism where the particular needs of a requesting group of clients can be met by providing relevant context information regarding a specific object of interest, which information has been adapted to particular requirements and needs of the group. In this solution, a "customized" rule can be created for the requesting group defining conditions for refined context information. An aggregated context function creates an aggregated context for the group by collecting individual context data for each of the group's members, in order to create the customized rule valid for the group. The customized rule is sent in an adapted request to a context server for refined context information on the object of interest. Context data refined according to the customized rule is then received in response from the context server. GB 2366699 A describes a method for monitoring the behaviour of customers in a telecommunication network. US 2004/063424 A1 describes a method for preventing real-time and near real-time fraud in voice and data communications. WO 00/64193 A2 describes a system for generating a three-level customer behaviour profile and detecting any unusual activity in the customer behaviour. US 5790645 A relates to automatic design of fraud detection systems using machine learning and data mining methods.

It is thus common to form groups with plural members having mutual interests in some respect, in order to share information between the members by using any of the above-described mechanisms for presence services and client contexts.

However, when a communication client wants to join an existing group of communication clients as a new member, it is sometimes not possible to determine whether he/she will fit in with the group in some respect or not, or whether the group can accept the new member and vice versa. The new member may also want to find out whether the group is legitimate and can be trusted before joining, and the group may likewise want to know that the new member is
acceptable and trustworthy before admitting his/her membership.

Members in an existing client group, or a client who wants to join the group as a new member, might be prone to fraudulent or otherwise improper behaviour in some respect, at least in view of the other party. It may be of interest for both the new member and the existing group to make sure that him/her joining will not jeopardize security and comfort by fraud or general "bad" behaviour, either intentionally or unintentionally.

The aggregate behaviour within the group may thus be considered to be a norm that its members are expected or required to follow. If one member should deviate from the norm, the likelihood of fraud will increase. For example, if a member conforming to the norm for a long time suddenly starts to exhibit a divergent behaviour, his/her mobile terminal may have been stolen or cloned. Currently, there are no useful and reliable mechanisms for dealing with the issues above.

It is thus desirable to provide a solution that enables safe and secure membership of a communication client in a group, and/or to reduce or minimise the risk of fraudulent or otherwise improper behaviour in some respect of a client or a group of clients.

### SUMMARY

The object of the present invention is to address the problems outlined above. This object and others are achieved primarily by providing a method and apparatus for monitoring the behaviour of an individual communication client in relation to the behaviour of a group of communication clients, wherein the individual client has joined or intends to join said client group for sharing client data.

In the inventive method, client data is collected based on activities reflecting the individual client's behaviour in a communication network, said collected client data forming a resulting client behaviour profile. The collected client data is then compared with a behaviour profile of the client group reflecting the behaviour of the client group in a communication network. An alerting signal is issued if an unacceptable behavioural deviation between the individual client and the client group is detected.

The group behaviour profile may define an expected or required norm of behaviour for the client group, and the alerting signal is then issued if an unacceptable behaviour of the individual client in view of the client group is detected. The group behaviour profile may also be compared with the resulting client behaviour profile, and the alerting signal is then issued if an unacceptable behaviour of the client group in view of the individual client is detected.

The alerting signal may be provided as a notification to said individual client or to an associated administrator, or as a notification to at least one client in the client group or to an associated administrator.

The group behaviour profile may be adjusted based on one or more detected deviations between the individual client and the client group. The client data can be collected by using any mechanisms for providing call data records, presence data and context data. The collected client data may relate to any of: browsing and downloading activities, financial transactions, geographical movements, the duration of calls and sessions, bandwidth consumption, and the time of day, week or season for different client activities.

The group behaviour profile may be created based on a history of client data collected for activities reflecting the client group's behaviour, and may also be updated continuously based on client data collected based on further activities by clients in the client group.

The inventive method may be used for detecting fraudulent or otherwise improper behaviour. The collected client data may form a plurality of resulting client behaviour profiles corresponding to a plurality of client groups that the individual client has joined or intends to join for sharing client data.

The inventive apparatus comprises a client database for collecting client data based on activities reflecting the individual client's behaviour in a communication network, a comparing unit for comparing the collected client data with a behaviour profile of the client group, and an alert generator for issuing an alerting signal if an unacceptable behavioural deviation between the individual client and the client group is detected.

The comparing unit may be adapted to compare the group behaviour profile with said resulting client behaviour profile, and the alert generator is adapted to issue the alerting signal if an unacceptable behaviour of the client group in view of the individual client is detected.

The alert generator may be adapted to provide the alerting signal as a notification to said individual client or to an associated administrator, or to provide the alerting signal as a notification to at least one client in the client group or to an associated administrator.

The client database may be adapted to collect the client data by using any mechanisms for providing call data records, presence data and context data.

The inventive apparatus may be used for detecting fraudulent or otherwise improper behaviour.

Further preferred features and benefits of the present invention will become apparent from the detailed description below.

### BRIEF DESCRIPTION OF THE DRAWINGS

The present invention will now be described in more detail by means of preferred embodiments and with reference to the accompanying drawings, in which:
- Fig. 1 is a block diagram illustrating mechanisms for providing presence data and context data for a communication client, according to the prior art.
- Fig. 2 is a block diagram of a behaviour monitoring server, according to one embodiment.
- Fig. 3 is a diagram illustrating the number of registered events related to a certain measured parameter, when monitoring the behaviour of an individual client and/or a client group.
- Fig. 4 is a block diagram of a behaviour monitoring server in communication with plural client data servers, according to another embodiment.
- Fig. 5 is a flow chart illustrating the basic steps for monitoring the behaviour of an individual client in relation to a group of clients, according to yet another embodiment.
- Fig. 6 is a flow chart illustrating the basic steps for monitoring the behaviour of an individual client in relation to a group of clients, according to yet another embodiment.

### DETAILED DESCRIPTION

Briefly described, the present invention provides an automatic mechanism that can be used for checking, estimating or generally monitoring the behaviour of a communication client in relation to the behaviour of a group with plural clients, in order to detect any serious or unacceptable deviations between them. It also enables relatively safe and secure membership for an individual client in a group, from the viewpoint of either the individual client or the existing client group, or both. Further, the risk of fraudulent or otherwise improper behaviour of a client or a group of clients can also be reduced, avoided or minimised.

A behaviour profile may define an expected or required norm of behaviour for clients in a group that an individual client has joined or intends to join. The behaviour profile thus represents a behavioural pattern or norm valid for clients in the group and may include only certain behavioural parameters of interest to the group. The behaviour profile or norm of the group can be created based on a history of client data for members in the group collected over time for activities reflecting the client group's behaviour.

In this solution, client data reflecting the individual client's behaviour is collected on a continuous basis in a behaviour monitoring server or the like, and the collected client data is compared with the group behaviour profile in order to detect any behavioural deviations of the individual client's client data from said profile, or vice versa. For example, if it is detected that any collected client data indicates an unacceptable or significant deviation of the individual client's behaviour from the group behaviour profile, an alerting signal is issued, e.g. as a notification to the individual client himself/herself, to the client group or to an associated administrator or the like.

A client in an established group of clients thus displays a specific behavioural pattern that can be detected by using the existing mechanisms for providing call data records, presence services and client contexts, although the present invention is not limited thereto. The client behaviour discussed above may be reflected by various different activities and parameters, such as browsing and downloading activities on the Internet, financial transactions (amount, time, location, vendor, etc), geographical movements, the duration of calls and sessions, bandwidth consumption, and the time of day, week or season for different activities, etc.

As mentioned above, the client data may thus be collected at a server, e.g. by using any of the above-described mechanisms for providing call data records, presence data and context data. This server will be referred to as a "behaviour monitoring server" in the following to indicate its activities. A procedure and arrangement for monitoring or estimating the behaviour of an individual communication client in relation to a group of communication clients according to one embodiment, will now be described initially with reference to Fig. 2.

An individual client generally denoted 200 operates a mobile terminal T connected to a mobile network N. In addition, one or more sensors S may be arranged to detect various behaviour-related activities and parameters of the client, providing raw client data to a context server, not shown, in the manner described above. Fig. 2 thus generally illustrates that terminal T, network N and/or sensor(s) S provide various client data to a behaviour monitoring server 202, which is collected in a client database 202a. The collected client data is thus generally based on the individual client's activities in the network N, although it can be detected, verified and provided by any of the illustrated terminal T, network N or sensor(s) S, e.g. over a presence server or a context server or any other suitable network node that can provide client data related to the individual client's activities.

The collected client data defines a resulting behaviour profile CP for the client 200 that reflects the actual behaviour of client 200 with respect to the behavioural parameters and activities being monitored. A comparing unit 202b is adapted to compare the collected client data with a behaviour profile GP reflecting the behaviour of a group of communication clients. The group profile GP may define a norm of expected or required behaviour for the client group, as described above. The group behaviour profile GP can be stored in the behaviour monitoring server 202, as shown in this example, or may be otherwise accessible to the behaviour monitoring server 202, e.g., from a corresponding group data server 204 serving the group. The group data server 204 may thus create the group behaviour profile GP based on activities of the members of the group 206, as indicated in the figure, and either send the profile GP to server 202 or maintain it accessible to server 202.

If the comparing unit 202b detects that the collected client data, e.g. according to the resulting behaviour profile CP, indicates a behavioural deviation between the individual client and the client group behaviour profile GP, an alerting signal A is issued from an alert generator 202c. The alerting signal may thus work as a notification for either an unacceptable behaviour of the individual client 200 in view of the client group, or an unacceptable behaviour of the client group in view of the individual client 200. In the shown example, the alerting signal A is provided as a notification to the individual client 200 or to an associated administrator (not shown). Alternatively, the alerting signal may be provided as a notification to at least one client in the client group or an associated administrator, or to any other interested party.

It should be noted that Fig. 2 is a logic illustration of the present embodiment. In practice, the solution according to this embodiment can be modified in different ways, without parting from the shown logic of the behaviour monitoring server 202. For example, the described comparing function of unit 202b may be implemented in the group data server 204 that generates and maintains the group profile GP. In that case, the behaviour monitoring server 202 can send the resulting client profile CP thereto, whenever a comparison and a behaviour evaluation are desired or required. Likewise, the shown alert generator 202c may be implemented in the group data server 204 as well.

Alternatively, the comparing function of unit 202b and the alert generator 202c may be implemented in a "third party" server that receives the client profile CP and the group profile GP from client database 202a and group data server 204, respectively.

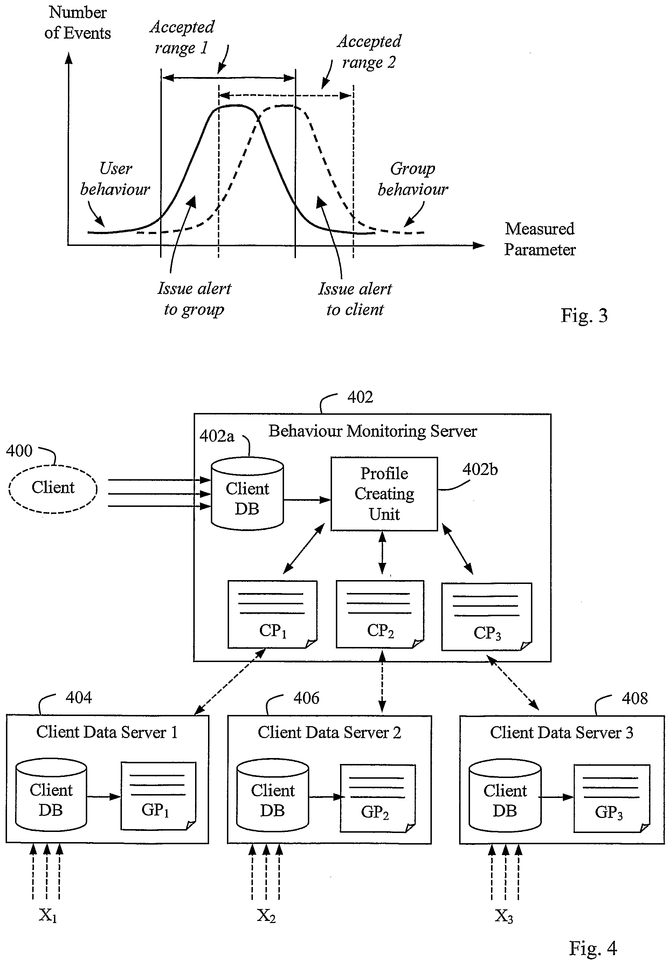

Fig. 3 is a plotted diagram illustrating the number of registered events related to a certain measured parameter reflecting a certain behaviour of an individual client and a group of clients, respectively, when monitoring the behaviour of the individual client in relation to the client group. For example, an event may be registered when a call or session is executed, and the measured parameter may then be the duration of the call or session or the bandwidth consumed during the call or session. In another example, an event may be registered when a transaction of money is executed in a purchase, and the measured parameter may be the amount transferred. In yet another example, sensors may have registered that the transaction was invoked from a location remote from an area between two further detected locations, which would indicate that the personal data may have been illegitimately used in the transaction by a malicious party not located where expected. It should be noted that the examples above are particularly relevant for a mobile client.

The full curve in Fig. 3 represents measurements for the behaviour of an individual client, whereas the dashed curve represents measurements for the aggregated behaviour of members in the client group. These curves are built up over time as more and more events are registered. The situation shown thus represents a certain point in time. Similar curves can basically be considered for any measured behavioural parameter in order to determine whether the behaviour of an individual client or a client group can be deemed acceptable to the other party.

An accepted parameter range can be defined for the individual client or for the client group in view of the other party, and in this example a first range 1 of acceptable parameter values is indicated for the user and a second accepted range 2 is indicated for the client group. An accepted parameter range is thus defined by at least one threshold determining when an alert signal is to be issued.

If an event is registered for the individual client falling outside the accepted range 2, an alert generator can be arranged to issue an alert signal to the group as a notification for an unacceptable behaviour of the individual client in view of the client group. An alert signal may also be issued to the individual client to notify him/her of the unacceptable behaviour.

In the same manner, if an event is registered for someone in the client group falling outside the acceptable range 1, the monitoring logic can be arranged to issue an alert signal to the individual client as a notification for an unacceptable behaviour of the client group in view of the individual client.

Referring to Fig. 3, it is also possible to consider only one of the two curves, or to define an accepted range 1 or 2 with only an upper (or lower) limit or threshold of acceptance, such that an alert signal is issued only for events when the upper (or lower) threshold is exceeded (or not reached). Furthermore, warning thresholds can also be defined such that the monitoring logic is adapted to issue a specific warning alert signal when the warning threshold is exceeded (or not reached) but not exceeding (or reaching) the threshold of acceptance.

Fig. 4 illustrates an arrangement for monitoring the behaviour of an individual client 400, according to another embodiment. A behaviour monitoring server 402 receives various client data related to the behaviour of client 400 generally based on activities in a network using a communication terminal (not shown), thus basically as described above for Fig. 2, which is collected in a client database 402a.

In this embodiment, the client 400 has joined or intends to join three client groups 1-3 being served by associated client data servers 404, 406 and 408, respectively. Thus, different group profiles GP₁, GP₂ and GP₃ are defined in the client data servers for client groups 1-3, respectively. A client database is also illustrated in each server 404-408 collecting client data X₁, X₂ and X₃ for the respective group members, basically in the same manner as client database 402a.

A profile creating unit 402b in the behaviour monitoring server 402 is arranged to create separate resulting client profiles CP₁, CP₂ and CP₃ based on the collected client data, and which are relevant for the client groups 1-3, respectively. Hence, client profile CP₁ is created with respect to certain aspects and behavioural parameters of interest to the first group, and so forth, such that client profiles CP₁, CP₂ and CP₃ contain different sets of behavioural parameters.

Collected client data according to behavioural parameters in each resulting client profile CP₁, CP₂ and CP₃ is then compared with the group profiles GP₁, GP₂ and GP₃ in order to detect any behavioural deviations of the collected client data from said group profiles, or vice versa. Just as in the example of Fig. 2, a comparing unit or similar monitoring logic (not shown here) may be arranged in the behaviour monitoring server 402 for performing the above comparisons. An alert generator, not shown, is also arranged to issue an alert signal if an unacceptable behavioural deviation is detected between the individual client and any of the client groups, basically in the manner described for Fig. 2. The alert signal may be provided as a notification to any of the individual client and the client groups, and/or to an interested third party.

Similar to the alternatives described for Fig. 2, the solution according to this embodiment can also be modified in different ways, without parting from the described logic of the behaviour monitoring server 402. For example, a comparing function may be implemented in each group data server 404-408 to which the respective resulting client profiles CP₁, CP₂ and CP₃ are sent.

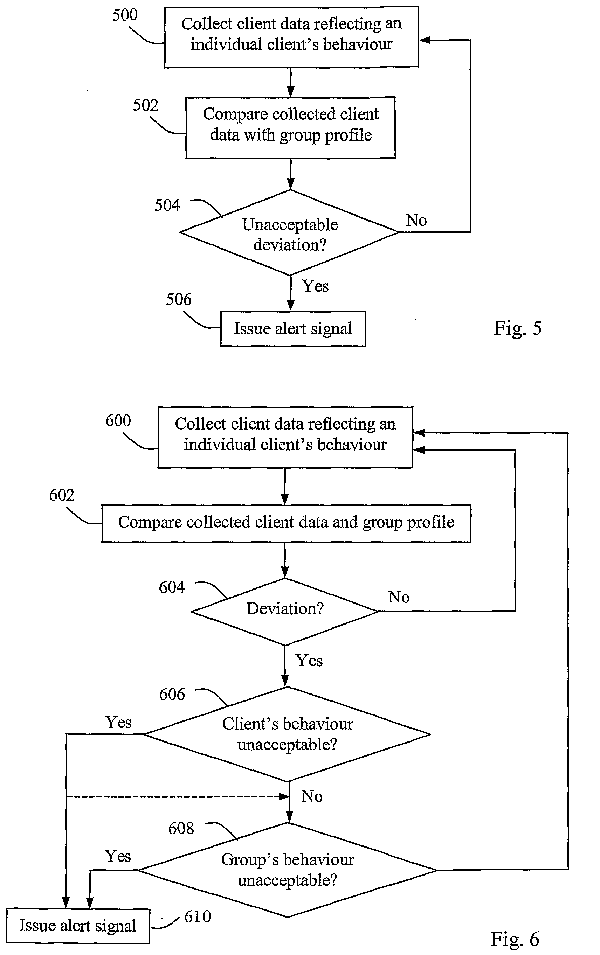

Fig. 5 is a flow chart illustrating the basic steps for monitoring the behaviour of an individual client in relation to a group of clients, according to yet another embodiment. The shown steps may be executed by a behaviour monitoring server, e.g., as described for any of Figs 2 and 4. It is assumed that the individual client operates a communication terminal when connected to a communication network.

In a first **step 500,** client data reflecting the individual client's behaviour is collected using the terminal, the network and/or any additional sensors, e.g. in the manner described above. At least client data according to behavioural parameters of interest to the group should be collected in this step.

In a next **step 502,** the collected client data is compared with a group profile representing the behaviour of members in the client group, in order to detect any behavioural deviations of the collected client data from the group profile, or vice versa. The group profile may be valid as a norm for expected or required behaviour within the group, thus containing certain behavioural parameters of interest to the group. Moreover, the group profile may also an aggregated result from client data being collected for members in the group, e.g., using a client data server serving the group.

It is then determined whether an unacceptable behavioural deviation is detected between the individual client and the client group, in a following **step 504.** If so, an alert signal is issued in a next **step 506,** which may be provided to the client group and/or to the individual client or a third party as a notification for the unacceptable behaviour, of either the individual client in view of the client group or vice versa. However, if no unacceptable behavioural deviation is detected in step 504, the process may return to step 500, and so forth. The process of Fig. 5 may be repeated each time an event is registered for the individual client or for a member in the client group.

Fig. 6 is another somewhat modified flow chart illustrating the basic steps for monitoring the behaviour of an individual client in relation to a client group, according to yet another embodiment. The shown steps may be executed by a behaviour monitoring server, e.g., as described for Figs 2 and 4, in order to detect any unacceptable behavioural deviations of the individual client in view of the client group, and vice versa. Just as in Fig. 5, client data reflecting the individual client's behaviour is collected in a first **step 600,** and the collected client data is compared with a group profile in a following **step 602,** in order to detect any behavioural deviations between the collected client data and the group according to the group profile.

It is then determined whether a behavioural deviation is detected between the individual client and the client group, in a further **step 604.** If not, steps 600-604 are basically repeated until a behavioural deviation is detected. If that occurs, it is further determined whether the detected deviation indicates that the individual client's behaviour is deemed unacceptable in view of the client group, in a **step 606.** If not, it is further determined whether the detected deviation indicates that the client group's behaviour is deemed unacceptable in view of the individual client, in a further **step 608.** If it is determined that neither the client group's behaviour is deemed unacceptable in view of the individual client in step 608, the process returns to the initial step 600.

If it is determined in step 606 that the individual client's behaviour is deemed unacceptable in view of the client group, an alert signal is issued in a step 610. Likewise, if it is determined in step 608 that the client group's behaviour is deemed unacceptable in view of the individual client, the alert signal is issued in step 610. It is also possible to modify the procedure by estimating the behaviour of both the client and the group in steps 606 and 608 regardless of the outcome of step 606, as indicated by the dashed arrow. The process of Fig. 6 may be repeated each time an event is registered for the individual client or for a member in the client group.

As mentioned above, an alert signal may be provided to any third party being interested in detecting deviations between the behaviour of the individual client and the behaviour of the client group. The third party may be a merchant or vendor or the like serving the individual client of interest. For example, the merchant may want to take some suitable action if an unacceptable behaviour is detected, such as blocking the client's credit card.

The third party may connect to the behaviour monitoring server (e.g. 202 or 402) or to a group data server, by sending an SIP SUBSCRIBE message optionally containing selected limit or threshold values determining when an alert signal is to be issued. The behaviour monitoring server may then respond to the third party by providing the alert signal carried by an SIP NOTIFY message. The third party may communicate with the behaviour monitoring server over a PGM (Presence and Group Management) server which is defined by OMA (Open Mobile Alliance).

In the solution described above by means of various embodiments, it may of course be up to the individual client to decide which behavioural parameter(s) to measure and use as a basis for the behaviour estimation, i.e. the client data collected in the described client database 202a or 402a of Figs 2 and 4, respectively. In this way, the client's privacy and integrity can be preserved.

By way of example, the present invention may be used for monitoring the behaviour of the members in a group sharing an IPTV service, e.g. a family. A group behaviour profile could then be created based on the normal TV watching habits of the different members of the group. If the children normally watch a children show between 6pm and 7pm, and the parents normally watch the nine o'clock news at 9pm, the resulting group behaviour profile would include a viewing pattern of: 1) children's programs between 6pm and 7pm, and 2) news between 9pm and 10pm. This pattern may be verified and reinforced as the family continue to basically follow the pattern. Small deviations from this pattern may be accepted without alerts, as defined by the group. However, if a significant divergence from the pattern is detected by registering events for the viewing of adult movies around 1am - 3am, the system may be configured to issue an alert in the manner described above.

The above-described solution generally provides a simple yet effective mechanism for early detection of fraud or otherwise improper behaviour of a client or a group of clients. The inventive solution can also be used to trigger a warning when irrational actions are made unintentionally, such as if the individual client, e.g., by mistake makes purchases over the used network by unintentionally pressing a button on the terminal, or similar. The client can also discover behavioural patterns about himself/herself, which provides added value and increased control of usage history information.

While the invention has been described with reference to specific exemplary embodiments, the description is generally only intended to illustrate the inventive concept and should not be taken as limiting the scope of the invention. For example, the SIP signalling protocol and IMS concept have been used when describing the embodiments above, although any other standards and service network types may basically be used. The present invention is defined by the appended claims.

## Claims

1. A method in a behaviour monitoring server (202) of monitoring a behaviour of an individual communication client (200) in relation to a behaviour of a group of communication clients (206), wherein the individual communication client (200) operates a communication terminal (T) in a communication network (N) and has joined or intends to join said client group (206) for sharing client data, comprising the following steps executed by the behaviour monitoring server (202):
- collecting (500) the client data based on activities reflecting the individual communication client's behaviour in the communication network (N), said collected client data forming a resulting client behaviour profile (CP) that reflects the behaviour of the individual communication client (200),
- comparing (502) the collected client data with a group behaviour profile (GP) of said client group (206) reflecting the behaviour of the client group (206) in the communication network (N) and including behavioural parameters of interest to the client group (206), wherein the group behaviour profile (GP) has been created based on activities of the members of the client group (206), and
- issuing (506) an alerting signal if an unacceptable behavioural deviation between the individual communication client (200) and the client group (206) is detected by finding that a measured behavioural parameter in the client behaviour profile (CP) or in the group behaviour profile (GP) falls outside a defined accepted parameter range,
wherein the group behaviour profile (GP) is compared with said resulting client behaviour profile (CP), and the alerting signal is issued if a behaviour of the client group (206), deemed unacceptable in view of the individual communication client (200) is detected, wherein the group behaviour profile (GP) has been created based on a history of client data collected for activities reflecting the behaviour of the client group (206), and
wherein the group behaviour profile (GP) is updated continuously based on client data collected based on further activities by the members in the client group (206).

2. A method according to claim 1, wherein the group behaviour profile (GP) defines an expected or required norm of behaviour for the client group (206).

3. A method according to claim 1 or 2, wherein the alerting signal is provided as a notification to said individual communication client (200) or to an associated administrator.

4. A method according to claim 1 or 2, wherein the alerting signal is provided as a notification to at least one client in the client group (206) or to an associated administrator.

5. A method according to any of claims 1-4, wherein the group behaviour profile (GP) is adjusted based on one or more detected deviations between the individual communication client (200) and the client group (206).

6. A method according to any of claims 1-5, wherein the client data is collected by using any mechanisms for providing call data records, presence data, and context data.

7. A method according to any of claims 1-6, wherein the collected client data relates to any of: browsing and downloading activities, financial transactions, geographical movements, the duration of calls and sessions, bandwidth consumption, and the time of day, week, or season for different client activities.

8. A method according to any of claims 1-7, wherein the method is used for detecting fraudulent or otherwise improper behaviour.

9. A method according to any of claims 1-8, wherein said collected client data forms a plurality of resulting client behaviour profiles corresponding to a plurality of client groups that the individual communication client (200) has joined or intends to join for sharing the client data.

10. An apparatus in a behaviour monitoring server (202) for monitoring a behaviour of an individual communication client (200) in relation to a behaviour of a group of communication clients (206), wherein the individual communication client (200) operates a communication terminal (T) in a communication network (N) and has joined or intends to join said client group (206) for sharing client data, comprising:
- a client database (202a) for collecting the client data based on activities reflecting the individual communication client's behaviour in the communication network (N), said collected client data forming a resulting client behaviour profile (CP) that reflects the behaviour of the individual communication client (200),
- a comparing unit (202b) for comparing the collected client data with a group behaviour profile (GP) of said client group (206) reflecting the behaviour of the client group (206) in the communication network (N) and including behavioural parameters of interest to the client group (206), wherein the group behaviour profile (GP) has been created based on activities of the members of the client group (206), and
- an alert generator (202c) for issuing an alerting signal (A) if an unacceptable behavioural deviation between the individual communication client (200) and the client group (206) is detected by finding that a measured behavioural parameter in the client behaviour profile (CP) or in the group behaviour profile (GP) falls outside a defined accepted parameter range,
wherein the comparing unit (202b) is adapted to compare the group behaviour profile (GP) with said resulting client behaviour profile (CP), and the alert generator (202c) is adapted to issue the alerting signal (A) if a behaviour of the client group (206), deemed unacceptable in view of the individual communication client (200) is detected, wherein the group behaviour profile (GP) has been created based on a history of client data collected for activities reflecting the behaviour of the client group (206), and
wherein the group behaviour profile (GP) is updated continuously based on client data collected based on further activities by clients in the client group (206).

11. An apparatus according to claim 10, wherein the group behaviour profile (GP) defines an expected or required norm of behaviour for the client group (206).

12. An apparatus according to claim 10 or 11, wherein the alert generator (202c) is adapted to provide the alerting signal (A) as a notification to said individual communication client (200) or to an associated administrator.

13. An apparatus according to claim 10 or 11, wherein the alert generator (202c) is adapted to provide the alerting signal (A) as a notification to at least one client in the client group (206) or to an associated administrator.

## Patentansprüche

1. Verfahren in einem Verhaltensüberwachungsserver (202) zum Überwachen eines Verhaltens eines einzelnen Kommunikationskunden (200) in Bezug auf ein Verhalten einer Gruppe von Kommunikationskunden (206), wobei der einzelne Kommunikationskunde (200) ein Kommunikationsendgerät (T) in einem Kommunikationsnetz (N) betreibt und sich der Kundengruppe (206) angeschlossen hat oder plant, sich dieser anzuschließen, um Kundendaten zu teilen, umfassend die folgenden Schritte, die von dem Verhaltensüberwachungsserver (202) ausgeführt werden:
- Sammeln (500) der Kundendaten auf Grundlage von Aktivitäten, die das Verhalten des einzelnen Kommunikationskunden in dem Kommunikationsnetz (N) wiederspiegeln, wobei die gesammelten Kundendaten ein resultierendes Kundenverhaltensprofil (CP) bilden, das das Verhalten des einzelnen Kommunikationskunden (200) wiederspiegelt,
- Vergleichen (502) der gesammelten Kundendaten mit einem Gruppenverhaltensprofil (GP) der Kundengruppe (206), das das Verhalten der Kundengruppe (206) in dem Kommunikationsnetz (N) wiederspiegelt und Verhaltensparameter von Interesse für die Kundengruppe (206) beinhaltet, wobei das Gruppenverhaltensprofil (GP) auf Grundlage von Aktivitäten der Mitglieder der Kundengruppe (206) erzeugt wurde, und
- Ausgeben (506) eines Alarmsignals, wenn eine unannehmbare Verhaltensabweichung zwischen dem einzelnen Kommunikationskunden (200) und der Kundengruppe (206) erfasst wird, indem herausgefunden wird, dass ein gemessener Verhaltensparameter in dem Kundenverhaltensprofil (CP) oder in dem Gruppenverhaltensprofil (GP) außerhalb eines definierten annehmbaren Parameterbereichs liegt,
wobei das Gruppenverhaltensprofil (GP) mit dem resultierenden Kundenverhaltensprofil (CP) verglichen wird und das Alarmsignal ausgegeben wird, wenn ein Verhalten der Kundengruppe (206), das im Hinblick auf den einzelnen Kommunikationskunden (200) als unannehmbar betrachtet wird, erfasst wird,
wobei das Gruppenverhaltensprofil (GP) auf Grundlage einer Historie der Kundendaten erzeugt wurde, die für Aktivitäten gesammelt wurden, die das Verhalten der Kundengruppe (206) wiederspiegeln, und wobei das Gruppenverhaltensprofil (GP) ständig auf Grundlage der Kundendaten aktualisiert wird, die auf Grundlage weiterer Aktivitäten durch die Mitglieder in der Kundengruppe (206) gesammelt werden.

2. Verfahren nach Anspruch 1, wobei das Gruppenverhaltensprofil (GP) eine erwartete oder erforderliche Verhaltensnorm für die Kundengruppe (206) definiert.

3. Verfahren nach Anspruch 1 oder 2, wobei das Alarmsignal als eine Benachrichtigung an den einzelnen Kommunikationskunden (200) oder an einen zugeordneten Administrator bereitgestellt wird.

4. Verfahren nach Anspruch 1 oder 2, wobei das Alarmsignal als eine Benachrichtigung an mindestens einen Kunden der Kundengruppe (206) oder an einen zugeordneten Administrator bereitgestellt wird.

5. Verfahren nach einem der Ansprüche 1 bis 4, wobei das Gruppenverhaltensprofil (GP) auf Grundlage von einer oder mehreren erfassten Abweichungen zwischen dem einzelnen Kommunikationskunden (200) und der Kundengruppe (206) angepasst wird.

6. Verfahren nach einem der Ansprüche 1 bis 5, wobei die Kundendaten unter Verwendung beliebiger Mechanismen zum Bereitstellen von Verbindungsdaten, Präsenzdaten und Kontextdaten gesammelt werden.

7. Verfahren nach einem der Ansprüche 1 bis 6, wobei sich die gesammelten Kundendaten auf eines von folgendem beziehen: Browsing- und Download-Aktivitäten, Finanztransaktionen, geographische Bewegungen, die Dauer von Anrufen und Sitzungen, Bandbreitenverbrauch und die Tageszeit, Woche oder die Jahreszeit für verschiedene Kundenaktivitäten.

8. Verfahren nach einem der Ansprüche 1 bis 7, wobei das Verfahren zum Erfassen eines betrügerischen oder anderweitig unangemessenen Verhaltens verwendet wird.

9. Verfahren nach einem der Ansprüche 1 bis 8, wobei die gesammelten Kundendaten eine Vielzahl von resultierenden Kundenverhaltensprofilen bilden, die einer Vielzahl von Kundengruppen entspricht, der sich der einzelne Kommunikationskunde (200) angeschlossen hat oder plant, sich anzuschließen, um die Kundendaten zu teilen.

10. Vorrichtung in einem Verhaltensüberwachungsserver (202) zum Überwachen eines Verhaltens eines einzelnen Kommunikationskunden (200) in Bezug auf ein Verhalten einer Gruppe von Kommunikationskunden (206), wobei der einzelne Kommunikationskunde (200) ein Kommunikationsendgerät (T) in einem Kommunikationsnetz (N) betreibt und sich der Kundengruppe (206) angeschlossen hat oder plant, sich dieser anzuschließen, um Kundendaten zu teilen, umfassend:
- eine Kundendatenbank (202a) zum Sammeln der Kundendaten auf Grundlage von Aktivitäten, die das Verhalten des einzelnen Kommunikationskunden in dem Kommunikationsnetz (N) wiederspiegeln, wobei die gesammelten Kundendaten ein resultierendes Kundenverhaltensprofil (CP) bilden, das das Verhalten des einzelnen Kommunikationskunden (200) wiederspiegelt,
- eine Vergleichseinheit (202b) zum Vergleichen der gesammelten Kundendaten mit einem Gruppenverhaltensprofil (GP) der Kundengruppe (206), das das Verhalten der Kundengruppe (206) in dem Kommunikationsnetz (N) wiederspiegelt und Verhaltensparameter von Interesse für die Kundengruppe (206) beinhaltet, wobei das Gruppenverhaltensprofil (GP) auf Grundlage von Aktivitäten der Mitglieder der Kundengruppe (206) erzeugt wurde, und
- einen Alarmgenerator (202c) zum Ausgeben eines Alarmsignals (A), wenn eine unannehmbare Verhaltensabweichung zwischen dem einzelnen Kommunikationskunden (200) und der Kundengruppe (206) erfasst wird, indem herausgefunden wird, dass ein gemessener Verhaltensparameter in dem Kundenverhaltensprofil (CP) oder in dem Gruppenverhaltensprofil (GP) außerhalb eines definierten annehmbaren Parameterbereichs liegt,
wobei die Vergleichseinheit (202b) ausgelegt ist, das Gruppenverhaltensprofil (GP) mit dem resultierenden Kundenverhaltensprofil (CP) zu vergleichen, und der Alarmgenerator (202c) ausgelegt ist, das Alarmsignal (A) auszugeben, wenn ein Verhalten der Kundengruppe (206), das im Hinblick auf den einzelnen Kommunikationskunden (200) als unannehmbar betrachtet wird, erfasst wird,
wobei das Gruppenverhaltensprofil (GP) auf Grundlage einer Historie der Kundendaten erzeugt wurde, die für Aktivitäten gesammelt wurden, die das Verhalten der Kundengruppe (206) wiederspiegeln, und wobei das Gruppenverhaltensprofil (GP) ständig auf Grundlage der Kundendaten aktualisiert wird, die auf Grundlage weiterer Aktivitäten durch die Mitglieder in der Kundengruppe (206) gesammelt werden.

11. Vorrichtung nach Anspruch 10, wobei das Gruppenverhaltensprofil (GP) eine erwartete oder erforderliche Verhaltensnorm für die Kundengruppe (206) definiert.

12. Vorrichtung nach Anspruch 10 oder 11, wobei der Alarmgenerator (202c) ausgelegt ist, das Alarmsignal (A) als eine Benachrichtigung an den einzelnen Kommunikationskunden (200) oder an einen zugeordneten Administrator bereitzustellen.

13. Vorrichtung nach Anspruch 10 oder 11, wobei der Alarmgenerator (202c) ausgelegt ist, das Alarmsignal (A) als eine Benachrichtigung an mindestens einen Kunden der Kundengruppe (206) oder an einen zugeordneten Administrator bereitzustellen.

## Revendications

1. Procédé dans un serveur de surveillance du comportement (202) pour surveiller un comportement d'un client de communication individuel (200) en relation à un comportement d'un groupe de clients de communication (206), dans lequel le client de communication individuel (200) utilise un terminal de communication (T) dans un réseau de communication (N) et a rejoint ou a l'intention de rejoindre ledit groupe de clients (206) pour partager des données client, comprenant les étapes suivantes exécutées par le serveur de surveillance du comportement (202) :
- la collecte (500) des données client basée sur les activités reflétant le comportement du client de communication individuel dans le réseau de communication (N), lesdites données client collectées formant un profil de comportement du client résultant (CP) qui reflète le comportement du client de communication individuel (200),
la comparaison (502) des données client collectées avec un profil de comportement de groupe (GP) dudit groupe de clients (206) reflétant le comportement du groupe de clients (206) dans le réseau de communication (N) et comprenant les paramètres comportementaux d'intérêt par rapport au groupe de clients (206),
dans lequel le profil de comportement de groupe (GP) a été créé en se basant sur les activités des membres du groupe de clients (206), et
- l'émission (506) d'un signal d'alerte si une déviation comportementale inacceptable entre le client de communication individuel (200) et le groupe de clients (206) est détectée par la découverte d'un paramètre comportemental mesuré dans le profil de comportement du client (CP) ou dans le profil de comportement de groupe (GP) qui se situe à l'extérieur d'une plage de paramètres acceptés définie,
dans lequel le profil de comportement de groupe (GP) est comparé avec ledit profil de comportement du client résultant (CP), et le signal d'alerte est émis si un comportement du groupe de clients (206), jugé inacceptable en regard au client de communication individuel (200), est détecté,
dans lequel le profil de comportement de groupe (GP) a été créé en se basant sur un historique des données client collectées pour les activités reflétant le comportement du groupe de clients (206), et
dans lequel le profil de comportement de groupe (GP) est continuellement actualisé en se basant sur les données client collectées basées également sur les activités des membres dans le groupe de clients (206).

2. Procédé selon la revendication 1, dans lequel le profil de comportement de groupe (GP) définit une norme attendue ou exigée de comportement pour le groupe de clients (206).

3. Procédé selon la revendication 1 ou 2, dans lequel le signal d'alerte est fourni sous forme d'une notification audit client de communication individuel (200) ou à un administrateur associé.

4. Procédé selon la revendication 1 ou 2, dans lequel le signal d'alerte est fourni sous forme d'une notification à au moins un client dans le groupe de clients (206) ou à un administrateur associé.

5. Procédé selon l'une quelconque des revendications 1 à 4, dans lequel le profil de comportement de groupe (GP) est ajusté en se basant sur une ou plusieurs déviations détectées entre le client de communication individuel (200) et le groupe de clients (206).

6. Procédé selon l'une quelconque des revendications 1 à 5, dans lequel les données client sont collectées à l'aide d'un quelconque mécanisme fournissant des enregistrements de données d'appels, des données de présence et des données de contexte.

7. Procédé selon l'une quelconque des revendications 1 à 6, dans lequel les données client collectées sont apparentées à l'un quelconque : des activités de navigation et de téléchargement, des transactions financières, des mouvements géographiques, la durée des appels et des sessions, la consommation de bande passante et l'heure du jour, de la semaine ou de la saison pour les différentes activités du client.

8. Procédé selon l'une quelconque des revendications 1 à 7, dans lequel le procédé est utilisé pour détecter un comportement frauduleux ou autrement inapproprié.

9. Procédé selon l'une quelconque des revendications 1 à 8, dans lequel lesdites données client collectées forment une pluralité de profils de comportement client résultant correspondant à une pluralité de groupes de clients que le client de communication individuel (200) a rejoint ou a l'intention de rejoindre pour partager les données client.

10. Appareil dans un serveur de surveillance du comportement (202) pour surveiller un comportement d'un client de communication individuel (200) en relation à un comportement d'un groupe de clients de communication (206), dans lequel le client de communication individuel (200) utilise un terminal de communication (T) dans un réseau de communication (N) et a rejoint ou a l'intention de rejoindre ledit groupe de clients (206) pour partager des données client, comprenant :
- une base de données client (202a) pour collecter les données client basé sur les activités reflétant le comportement du client de communication individuel dans le réseau de communication (N), lesdites données client collectées formant un profil de comportement du client résultant (CP) qui reflète le comportement du client de communication individuel (200),
- une unité de comparaison (202b) pour comparer les données client collectées avec un profil de comportement de groupe (GP) dudit groupe de clients (206) reflétant le comportement du groupe de clients (206) dans le réseau de communication (N) et comprenant des paramètres comportementaux d'intérêt pour le groupe de clients (206), dans lequel le profil de comportement de groupe (GP) a été créé en se basant sur les activités des membres du groupe de clients (206), et
- un générateur d'alerte (202c) pour émettre un signal d'alerte (A) si une déviation comportementale inacceptable entre le client de communication individuel (200) et le groupe de clients (206) est détectée par la découverte d'un paramètre comportemental mesuré dans le profil de comportement du client (CP) ou dans le profil de comportement de groupe (GP) qui se situe à l'extérieur d'une plage de paramètres acceptés définie,
dans lequel l'unité de comparaison (202b) est conçue pour comparer le profil de comportement de groupe (GP) avec ledit profil de comportement client résultant (CP), et le générateur d'alerte (202c) est conçu pour émettre un signal d'alerte (A) si un comportement du groupe de clients (206), jugé inacceptable
en regard au client de communication individuel (200), est détecté,
dans lequel le profil de comportement de groupe (GP) a été créé en se basant sur un historique des données client collectées pour les activités reflétant le comportement du groupe de clients (206), et
dans lequel le profil de comportement de groupe (GP) est continuellement actualisé en se basant sur les données client collectées basées également sur les activités des clients dans le groupe de clients (206).

11. Appareil selon la revendication 10, dans lequel le profil de comportement de groupe (GP) définit une norme attendue ou exigée de comportement pour le groupe de clients (206).

12. Appareil selon la revendication 10 ou 11, dans lequel le générateur d'alerte (202c) est conçu pour fournir le signal d'alerte (A) sous forme d'une notification audit client de communication individuel (200) ou à un administrateur associé.

13. Appareil selon la revendication 10 ou 11, dans lequel le générateur d'alerte (202c) est conçu pour fournir le signal d'alerte (A) sous forme d'une notification à au moins un client dans le groupe de clients (206) ou à un administrateur associé.
